# EUROPÄISCHE PATENTANMELDUNG

(11) **EP 1 115 094 A2**
(43) Veröffentlichungstag der Anmeldung: **11.07.2001**
(21) Anmeldenummer: 00204705.8
(22) Anmeldetag: 22.12.2000
(51) Int. Cl.: G07F 7/10, G06K 19/073

(54) **Datenverarbeitungseinrichtung und Verfahren zu dessen Betrieb**

(30) Priorität: 08.01.2000 DE 10000503
(71) Anmelder: Philips Corporate Intellectual Property GmbH, 52064 Aachen (DE); Koninklijke Philips Electronics N.V., 5621 BA Eindhoven (NL)
(72) Erfinder: Wille, Thomas, Dr., c/o Philips Corporate, 52064 Aachen (DE); Hass, Wolfgang, c/o Philips Corporate, 52064 Aachen (DE)
(74) Vertreter: Volmer, Georg, Dipl.-Ing.

(57) **Zusammenfassung**

Die vorliegende Erfindung betrifft eine Datenverarbeitungseinrichtung, insbesondere Chipkarte oder Smart Card, sowie ein Verfahren zu dessen Betrieb, mit einer integrierten Schaltung, welche eine Zentralrecheneinheit (CPU) (10) sowie einen oder mehrere Co-Prozessor (12) aufweist. Hierbei weist die integrierte Schaltung eine Steuereinheit (18, 30) auf, welche die Prozessoren, CPU (10) bzw. Co-Prozessoren (12), derart ansteuert, dass im Falle einer kryptographischen Operation wenigstens zwei der Prozessoren gleichzeitig und parallel eine kryptographische Operation ausführen.

## Beschreibung

### Technisches Gebiet

Die Erfindung betrifft ein Verfahren zum Betreiben einer Datenverarbeitungseinrichtung, insbesondere einer Chipkarte oder Smart Card, mit einer integrierten Schaltung, welche eine Zentralrecheneinheit (CPU) sowie einen oder mehrere Co-Prozessoren aufweist, wobei von der integrierten Schaltung kryptographische Operationen ausgeführt werden, gemäß dem Oberbegriff des Anspruchs 1. Die Erfindung betrifft ferner eine Datenverarbeitungseinrichtung, insbesondere Chipkarte oder Smart Card, mit einer integrierten Schaltung, welche eine Zentralrecheneinheit (CPU) sowie einen oder mehrere Co-Prozessor aufweist, gemäß dem Oberbegriff des Anspruchs 10.

### Stand der Technik

In vielen Datenverarbeitungsgeräten mit integrierter Schaltung dienen beispielsweise kryptographische Operationen zum Schutz des Betriebes dieser Geräte bzw. zum Schutz von in dem Gerät gespeicherten Daten. Die hierfür notwendigen Rechenoperationen werden dabei sowohl von Standard-Rechenwerken (CPU) als auch von dedizierten Crypto-Rechenwerken (Co-Prozessor) durchgeführt. Ein typisches Beispiel für letzteres sind Chipkarten bzw. IC-Karten, wie beispielsweise eine sogen. Smart Card. Bei in diesem Zusammenhang verwendeten Daten bzw. Zwischenergebnissen handelt es sich üblicherweise um sicherheitsrelevante Informationen, wie beispielsweise kryptographische Schlüssel oder Operanden.

Bei von der integrierten Schaltung durchgeführten Rechenoperationen, beispielsweise zur Berechnung von kryptographischen Algorithmen, werden logische Verknüpfungen zwischen Operanden bzw. Zwischenergebnissen durchgeführt. In Abhängigkeit von der verwendeten Technologie führen diese Operationen, insbesondere das Laden von leeren oder zuvor gelöschten Speicherbereichen bzw. Register mit Daten, zu einem erhöhten Stromverbrauch der Datenverarbeitungsgeräte. Bei komplementärer Logik, wie beispielsweise der CMOS-Technik, tritt ein erhöhter Stromverbrauch dann auf, wenn der Wert einer Bit-Speicherzelle geändert wird, d.h. sein Wert sich von "0" auf "1" ändert. Der erhöhte Verbrauch hängt dabei von der Anzahl der im Speicher bzw. Register geänderten Bitstellen ab. Mit anderen Worten lässt das Laden eines zuvor gelöschten Registers einen Stromverbrauch proportional zum Hamminggewicht des in das leere Register geschriebenen Operanden (=Anzahl der Bits mit dem Wert "1") ansteigen. Durch eine entsprechende Analyse dieser Stromänderung könnte es möglich sein, Informationen über die berechneten Operationen zu extrahieren, so dass eine erfolgreiche Kryptoanalyse von geheimen Operanden, wie beispielsweise kryptographischen Schlüsseln, möglich ist. Mittels Durchführung mehrerer Strommessungen am Datenverarbeitungsgerät könnte beispielsweise bei sehr kleinen Signaländerungen eine hinreichende Extraktion der Informationen ermöglicht werden. Andererseits könnten mehrere Strommessungen eine ggf. erforderliche Differenzbildung ermöglichen. Diese Art der Kryptoanalyse wird auch als "Differential Power Analysis" bezeichnet, mittels derer ein Außenstehender durch reine Beobachtung von Änderungen des Stromverbrauches des Datenverarbeitungsgerätes eine ggf. unberechtigte Kryptoanalyse der kryptographischen Operationen, Operanden bzw. Daten erfolgreich ausführen kann. Die "Differential Power Analysis" ermöglicht somit über eine reine Funktionalität hinaus zusätzliche interne Informationen einer integrierten Schaltung gewinnen zu können.

Ein typisches Einsatzgebiet von den vorerwähnten Smart Cards sind beispielsweise Applikationen, bei denen die Smart Card als sicherer Informationsspeicher benutzt wird. Kryptographische Operationen sichern dabei den Zugang zu diesen Applikationen, indem die Smart Card selbständig Verschlüsselungsoperationen zum Zwecke der Authentikation ausführt. Dies ist nur möglich durch Verwendung eines speziellen Smart Card Controllers (Mikrocontrollers), der durch geeignete Software gesteuert wird. Der Kommunikationskanal zwischen Smart Card Controller und Smart Card Terminal ist direkt durch kryptographische Methoden gesichert, deren Sicherheitsniveau wesentlich vom verwendeten kryptographischen Algorithmus abhängt.

Um den Authentikationsvorgang einer Smart Card fälschen zu können, muss das Authentikationsprotokoll mittels eines Nachbaus emuliert werden können. Dies ist bei sicheren Protokollen nur dadurch möglich, indem der verwendete geheime kryptographische Schlüssel analysiert wird, der auf der Smart Card gespeichert ist.

Da Smart Card Controller reproduzierbar arbeitende Maschinen sind, könnten mittels der Analyse von indirekten Abstrahlungen einer Smart Card während der Operation, etwa durch Messen des zeitlichen Verlaufs des Stromverbrauchs mit der o.g. "Differential Power Analysis", interne Vorgänge im Smart Card Controller bestimmt und letztendlich der geheime Schlüssel ermittelt werden. Analysiert wird hierbei das reproduzierbare, deterministische Stromprofil für gleiche Programmsequenzen einer Smart Card Controllerschaltung.

Aus der US 4 813 024 ist eine integrierte Schaltung zum Speichern und Verarbeiten geheimer Daten bekannt, wobei ein Speicher eine Simulationsspeicherzelle aufweist, welche einen identischen Stromverbrauch aufweist wie eine Speicherzelle, die bisher nicht programmiert wurde. Hierdurch werden Schwankungen in Strom und Spannung nur für die Speicherzelle eliminiert, jedoch nicht für die Verarbeitung der Daten.

### Darstellung der Erfindung, Aufgabe, Lösung, Vorteile

Es ist Aufgabe der vorliegenden Erfindung, ein verbessertes Verfahren sowie eine verbesserte Datenverarbeitungseinrichtung der obengenannten Art zur Verfügung zu stellen, welche die obengenannten Nachteile beseitigen und eine "Differential Power Analysis" so weit wie möglich erschweren.

Diese Aufgabe wird durch ein Verfahren der o.g. Art mit den in Anspruch 1 gekennzeichneten Merkmalen und durch eine Datenverarbeitungseinrichtung der o.g. Art mit den in Anspruch 10 gekennzeichneten Merkmalen gelöst.

Dazu ist es bei einem Verfahren der o.g. Art erfindungsgemäß vorgesehen, dass bei Durchführung einer kryptographischen Operation in der integrierten Schaltung jeweils wenigstens zwei Prozessoren, CPU bzw. Co-Prozessoren, gleichzeitig und parallel eine kryptographische Operation ausführen.

Dies hat den Vorteil, dass sich im Betrieb während einer kryptographischen Operation ein Stromverbrauch der Datenverarbeitungseinrichtung aus den jeweiligen Stromaufnahmen der wenigstens zwei parallel arbeitenden Prozessoren aufsummiert, so dass die einzelnen Stromverläufe nicht mehr rekonstruierbar sind. Eine "Differential Power Analysis" ist somit nicht mehr erfolgreich durchführbar.

Vorzugsweise Weitergestaltungen des Verfahrens sind in den Ansprüchen 2 bis 9 beschrieben.

In einer bevorzugten Ausführungsform ist nur die kryptographische Operation eines Prozessors, CPU bzw. Co-Prozessoren, eine Nutzoperation und sind alle anderen kryptographischen Operationen Dummyoperationen, deren Ergebnis verworfen wird, wobei optional die Auswahl, welcher Prozessor, CPU oder Co-Prozessor, eine Nutzoperation ausführt, zufallsgesteuert wird.

In einer alternativen bevorzugten Ausführungsform ist die kryptographische Operation im Sinne des Stromverbrauchs aufgeteilt in zwei zueinander komplementäre Operationen. Führen nun zwei identische Co-Prozessoren die jeweils komplementäre kryptographische Operation zeitgleich aus, addieren sich die Stromverläufe ebenfalls komplementär, so dass eine DPA nicht mehr erfolgreich durchgeführt werden kann bzw. im Aufwand erheblich gesteigert werden muss.

Zum Erzielen einer besonders starken Verschleierung der von der "Differential Power Analysis" verwendeten Stromkurve und um etwaige Asymmetrien in den identisch konstruierten Co-Prozessoren auszugleichen, wird die kryptographische Operation in Teiloperationen zerlegt. Die Auswahl, welcher Co-Prozessor welche Operation komplementär oder nicht-komplementär ausführt wird dabei zufallsgesteuert.

In einer weiteren alternativen Ausführungsform wird eine kryptographische Operation in wenigstens zwei Teiloperationen aufgeteilt und werden die Teiloperationen gleichzeitig und parallel von den Prozessoren, CPU bzw. Co-Prozessoren, ausgeführt sowie anschließend entsprechende Teilergebnisse zu einem Gesamtergebnis der gesamten kryptographischen Operation zusammengefügt. Optional wird die Aufteilung der kryptographischen Operation in Teiloperationen zufallsgesteuert. Beispielsweise sind die Teiloperationen Teile einer Verschlüsselung nach DES (Data Encryption Standard).

Ferner ist es bei einer Datenverarbeitungseinrichtung erfindungsgemäß vorgesehen, dass die integrierte Schaltung eine Steuereinheit aufweist, welche die Prozessoren, CPU bzw. Co-Prozessoren, derart ansteuert, dass im Falle einer kryptographischen Operation wenigstens zwei der Prozessoren gleichzeitig und parallel eine kryptographische Operation ausführen.

Dies hat den Vorteil, dass sich im Betrieb während einer kryptographischen Operation ein Stromverbrauch der Datenverarbeitungseinrichtung aus den jeweiligen Stromaufnahmen der wenigstens zwei parallel arbeitenden Prozessoren aufsummiert, so dass die einzelnen Stromverläufe nicht mehr rekonstruierbar sind. Eine "Differential Power Analysis" ist somit nicht mehr erfolgreich durchführbar.

Vorzugsweise Weiterbildungen der Datenverarbeitungseinrichtung sind in den Ansprüchen 11 bis 14 beschrieben.

In einer bevorzugten Ausführungsform weist die Steuereinheit einen Aufteiler auf, welcher eine kryptographische Operation in wenigstens zwei Teiloperationen aufteilt und zur gleichzeitigen Abarbeitung an zwei getrennte Prozessoren der integrierten Schaltung, CPU bzw. Co-Prozessoren, zuführt, wobei die Steuereinheit bevorzugt ferner einen Rekombinierer aufweist, welcher jeweilige Teilergebnisse aus den von den Prozessoren gleichzeitig ausgeführten Teiloperationen wieder zusammenführt.

Zum Verhindern einer erfolgreichen Analyse einer Stromverbrauchskurve während der kryptographischen Operation ist der Aufteiler derart ausgebildet, dass wenigstens eine Teiloperation eine Dummyoperation ist, und dass derRekombinierer derart ausgebildet ist, dass dieser das jeweilige Ergebnis aus einem Prozessor, welcher eine Dummyoperation ausgeführt hat, verwirft.

Eine besonders gute Verschleierung der Stromverbrauchskurve erzielt man dadurch, dass die integrierte Schaltung zusätzlich einen Zufallsgenerator aufweist, welcher derart mit dem Aufteiler verbunden ist, dass dieser zufallsgesteuert arbeitet.

### Kurze Beschreibung der Zeichnungen

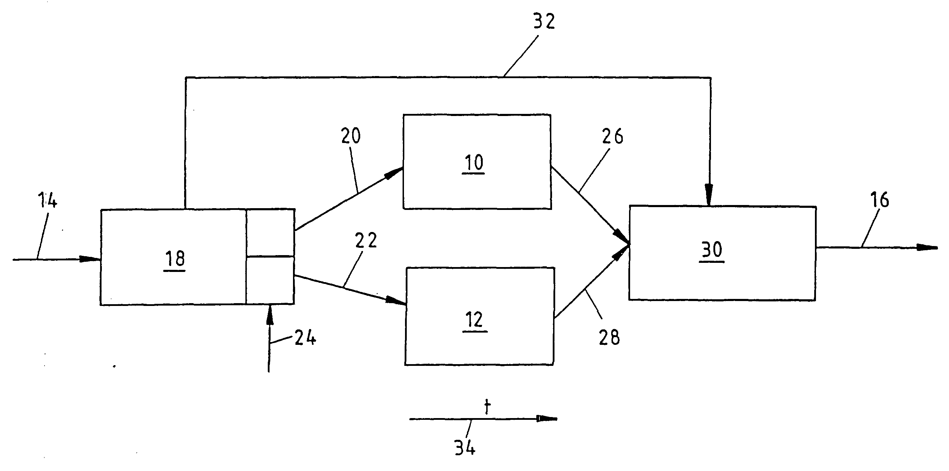

Nachstehend wird die Erfindung anhand der beigefügten Zeichnung näher erläutert. Diese zeigt in der einzigen Fig. ein schematisches Blockschaltbild eines Teils einer integrierten Schaltung einer erfindungsgemäßen Datenverarbeitungseinrichtung.

### Bester Weg zur Ausführung der Erfindung

Die einzige Figur zeigt einen Teil einer integrierten Schaltung einer ansonsten nicht näher dargestellten Datenverarbeitungseinrichtung, welche beispielsweise eine Smart Card oder eine Chipkarte ist. Die integrierte Schaltung umfasst eine zentrale Recheneinheit (CPU) oder einen Co-Prozessor A 10, einen Co-Prozessor B 12, einen Dateneingang 14 und einen Datenausgang 16. Zwischen dem Dateneingang 14 und der CPU oder einen Co-Prozessor A 10 bzw. dem Co-Prozessor B 12 ist ein Aufteiler 18 angeordnet, welcher im Falle einer von der integrierten Schaltung auszuführenden kryptographischen Operation diese in eine erste und zweite Teiloperation in Form eines ersten Datenteils 20 und eines zweiten Datenteils 22 aufteilt. Der erste Datenteil 20 wird der CPU oder dem Co-Prozessor A 10 und der zweite Datenteil 22 wird dem Co-Prozessor B 12 zum Abarbeiten mittels einer vorbestimmten kryptographischen Operation zugeführt. Der Aufteiler 18 weist ferner einen Zufallseingang 24 auf, mittels dem die Aufteilung in die Datenteile 20, 22 zufallsgesteuert ausgeführt wird.

Die CPU oder der Co-Prozessor A 10 und der Co-Prozessor B 12 führen eine jeweilige kryptographische Operation gleichzeitig und parallel aus. Hierdurch überlagern sich entsprechende Stromverbrauchskurven (Stromverbrauchsamplitude über Zeit), so dass die Einzelkurven der Einzelgeräte 10, 12 bzw. der jeweils in den Prozessoren 10, 12 getrennt ablaufenden Einzelprozesse nicht mehr analysiert werden können.

Aus der CPU oder dem Co-Prozessor A 10 kommt ein erstes Ergebnis 26 und aus dem Co-Prozessor B 12 kommt ein zweites Ergebnis 28, welche in einem Rekombinierer 30 wieder zu einem Gesamtergebnis zusammen gefasst und dem Datenausgang 16 zugeführt werden. Über eine Verbindung 32 informiert dabei der Aufteiler 18 den Rekombinierer 30 darüber, wie die jeweiligen Teilergebnisse 26, 28 wieder zusammen zu fügen sind. Dies ist notwendig, da aufgrund des Zufallseingangs 24 die Aufteilung durch den Aufteiler 18 immer in zufällig unterschiedlicher Weise erfolgt.

Ein Pfeil bzw. eine Zeitachse 34 veranschaulicht den Datenfluss durch die erfindungsgemäße Vorrichtung über die Zeit. Die Daten gelangen am Dateneingang 14 in der Fig. links in die Vorrichtung, gelangen über zwei parallele Datenwege 20, 22 zu den Prozessoren 10, 12, werden in den Prozessoren 10, 12 weiterverarbeitet und gelangen über die Wege 26, 28 wieder zusammen und verlassen die Vorrichtung in der Fig. rechts über den Datenausgang 16. Diese Daten umfassen beispielsweise an der Seite des Dateneingangs 14 einen kryptographischen Schlüssel oder Operanden, welcher zur Authentikation in den Prozessoren 10, 12 eine kryptographische Operation durchlaufen, wobei eine Authentikation nur dann als erfolgreich bzw. positiv angesehen wird, wenn am Datenausgang 16 ein vorbestimmtes Ergebnis ankommt.

Zur Verschleierung des sich aufgrund der kryptographischen Operation ergebenden zeitlichen Schwankungen des Stromverbrauchs, welche in der sogen. "Differential Power Analysis" einen Rückschluss auf die kryptographische Operation bzw. den richtigen kryptographischen Schlüssel erlauben könnte, werden die Prozessoren von der aus Aufteiler 18 und Rekombinierer 30 gebildeten Steuereinheit derart angesteuert, dass die beiden Prozessoren 10, 12 gleichzeitig und parallel eine kryptographische Operation ausführen, so dass sich deren Stromverbrauchskurven überlagern und nicht mehr getrennt analysiert werden können. Mit anderen Worten ist ein Trennung des von außen messbaren zeitlichen Verlaufes des Gesamtstromes nicht mehr möglich.

Hierbei wird der Schlüssel beispielsweise in zwei Datenteile 20, 22 aufgeteilt, welche jeweils getrennt voneinander in den Prozessoren 10, 12 einer kryptographischen Operation unterzogen und die Einzelergebnisse wieder zusammen geführt werden. Alternativ läuft in beiden Prozessoren 10, 12 exakt dieselbe kryptographische Operation ab, jedoch erhält nur ein Prozessor 10 oder 12, beispielsweise die CPU oder der Co-Prozessor A 10, den richtigen Schlüssel, während der jeweils andere Prozessor, beispielsweise der Co-Prozessor B 12, einen falschen Schlüssel erhält. Über die Verbindung 32 informiert der Aufteiler 18 den Rekombinierer 30, dass dieser das zweite Ergebnis 29 zu verwerfen hat und lediglich das erste Ergebnis 26 aus der CPU oder dem Co-Prozessor A 10 an den Datenausgang 16 übergibt. Ist hierbei der dem Co-Prozessor B 12 zugeführte falsche Schlüssel das Komplement des der CPU oder dem Co-Prozessor A 10 zugeführten echten Schlüssel, so ergeben sich bei der Ausführung der kryptographischen Operation komplementäre Stromverbrauchswerte in den beiden Prozessoren 10, 12, welche eine "Differential Power Analysis" faktisch unmöglich machen.

Es erfolgt die Aufteilung der kryptographischen Operation auf die beiden Prozessoren 10, 12 derart, dass niemals die typischen Stromverbrauchsverläufe der kryptographischen Operation eines einzelnen Schaltungsteiles 10, 12 ohne parallele Operation des jeweils anderen Schaltungsteils 10, 12, also CPU oder Co-Prozessor A 10 bzw. Co-Prozessor B 12, sichtbar werden.

Die Steuereinheit 18, 30 nimmt die Aufteilung in Teilaufgaben beispielsweise derart vor, dass durch Zufall gesteuert entschieden wird, welcher Schaltungsteil 10,12 die relevante kryptographische Operation ausführt. Der zu dem Zeitpunkt nicht relevante Schaltungsteil 10, 12 führt parallel dazu eine geeignete kryptographische Operation (Dummyoperation) aus, die sich im Stromverlauf völlig gleichwertig abbildet, aber für die Gesamtberechnung unerheblich ist.

Beispielsweise werden Teile einer DES (Data Encryption Standard) Verschlüsselung kontinuierlich oder auch nur teilweise die linke oder rechte Teilver-schlüsselung auf beide Schaltungsteile 10, 12 in durch Zufall ausgewählten Runden ausgetauscht.

Alternativ werden bei der Berechnung eines Triple-DES (einer mehrstufigen Verschlüsselung) die jeweils relevanten DES-Operationen zufällig zwischen den beiden Schaltungsteilen 10 und 12 verteilt, so dass nie vorhersehbar ist, welcher Schaltungsteile 10 oder 12 gerade die relevante kryptographische Operation ausführt. Bei der Steuerung beider Schaltungsteile 10, 12 ist zu beachten, dass deren typisches Frequenzspektrum zumindest in Teilen identisch ist, so dass sich Überlagerungen beider Stromverbrauchprofile auch nicht im Frequenzraum mittels einer Fourier-Transformationen separieren lassen.

### BEZUGSZEICHENLISTE

- 10: zentrale Recheneinheit (CPU)
- 12: Co-Prozessor
- 14: Dateneingang
- 16: Datenausgang
- 18: Aufteiler
- 20: erster Datenteil
- 22: zweiter Datenteil
- 24: Zufallseingang
- 26: erstes Ergebnis
- 28: zweites Ergebnis
- 30: Rekombinierer
- 32: Verbindung zw. Aufteiler und Rekombinierer
- 34: Zeitachse

## Patentansprüche

1. Verfahren zum Betreiben einer Datenverarbeitungseinrichtung, insbesondere einer Chipkarte oder Smart Card, mit einer integrierten Schaltung, welche eine Zentralrecheneinheit (CPU) sowie einen oder mehrere Co-Prozessoren aufweist, wobei von der integrierten Schaltung kryptographische Operationen ausgeführt werden,
dadurch gekennzeichnet,
dass bei Durchführung einer kryptographischen Operation in der integrierten Schaltung jeweils wenigstens zwei Prozessoren, CPU bzw. Co-Prozessoren, gleichzeitig und parallel eine kryptographische Operation ausführen.

2. Verfahren nach Anspruch 1,
dadurch gekennzeichnet,
dass nur die kryptographische Operation eines Prozessors, CPU bzw. Co-Prozessoren, eine Nutzoperation und alle anderen kryptographischen Operationen Dummyoperationen sind, deren Ergebnis verworfen wird.

3. Verfahren nach Anspruch 2,
dadurch gekennzeichnet,
dass die Auswahl, welcher Prozessor, CPU oder Co-Prozessoren, eine Nutzoperation ausführt, zufallsgesteuert wird.

4. Verfahren nach einem der vorhergehenden Ansprüche,
dadurch gekennzeichnet,
dass eine kryptographische Operation in wenigstens zwei Teiloperationen zerlegt wird und wenigstens zwei Prozessoren diese Teiloperationen parallel zeitgleich ausführen.

5. Verfahren nach Anspruch 4,
dadurch gekennzeichnet,
dass eine kryptographische Operation im Sinne des Stromverbrauchs in zwei zueinander komplementäre Operationen aufgeteilt wird.

6. Verfahren nach Anspruch 5,
dadurch gekennzeichnet,
dass die Auswahl, welcher Prozessor die Operation komplementär oder nicht-komplementär ausführt zufallsgesteuert wird.

7. Verfahren nach Anspruch 1,
dadurch gekennzeichnet,
dass eine kryptographische Operation in wenigstens zwei Teiloperationen aufgeteilt und die Teiloperationen gleichzeitig und parallel von den Prozessoren, CPU bzw. Co-Prozessoren, ausgeführt werden sowie anschließend entsprechende Teilergebnisse zu einem Gesamtergebnis der gesamten kryptographischen Operation zusammengefügt werden.

8. Verfahren nach Anspruch 7,
dadurch gekennzeichnet,
dass die Aufteilung der kryptographischen Operation in Teiloperationen zufallsgesteuert wird.

9. Verfahren nach Anspruch 7 oder 8,
dadurch gekennzeichnet,
dass die Teiloperationen Teile einer Verschlüsselung nach DES (Data Encryption Standard) sind.

10. Datenverarbeitungseinrichtung, insbesondere Chipkarte oder Smart Card, insbesondere zum Ausführen eines Verfahrens gemäß wenigstens einem der vorhergehenden Ansprüche, mit einer integrierten Schaltung, welche eine Zentralrecheneinheit (CPU) (10) sowie einen oder mehrere Co-Prozessoren (12) aufweist,
dadurch gekennzeichnet,
dass die integrierte Schaltung eine Steuereinheit (18, 30) aufweist, welche die Prozessoren, CPU (10) bzw. Co-Prozessoren (12), derart ansteuert, dass im Falle einer kryptographischen Operation wenigstens zwei der Prozessoren gleichzeitig und parallel eine kryptographische Operation ausführen.

11. Datenverarbeitungseinrichtung nach Anspruch 10,
dadurch gekennzeichnet,
dass die Steuereinheit einen Aufteiler (18) aufweist, welcher eine kryptographische Operation in wenigstens zwei Teiloperationen (20, 22) aufteilt und zur gleichzeitigen Abarbeitung an zwei getrennte Prozessoren der integrierten Schaltung, CPU (10) bzw. Co-Prozessoren (12), zuführt.

12. Datenverarbeitungseinrichtung nach Anspruch 11,
dadurch gekennzeichnet,
dass die Steuereinheit ferner einen Rekombinierer (30) aufweist, welcher jeweilige Teilergebnisse (26, 28) aus den von den Prozessoren (10, 12) gleichzeitig ausgeführten Teiloperationen (20, 22) wieder zusammenführt.

13. Datenverarbeitungseinrichtung nach Anspruch 12,
dadurch gekennzeichnet,
dass der Aufteiler (18) derart ausgebildet ist, dass wenigstens eine Teiloperation (20, 22) eine Dummyoperation ist, und dass der Rekombinierer (30) derart ausgebildet ist, dass dieser das jeweilige Ergebnis (26, 28) aus einem Prozessor (10, 12), welcher eine Dummyoperation ausgeführt hat, verwirft.

14. Datenverarbeitungseinrichtung nach einem der Ansprüche 11 bis 13,
dadurch gekennzeichnet,
dass die integrierte Schaltung zusätzlich einen Zufallsgenerator (24) aufweist, welcher derart mit dem Aufteiler (18) verbunden ist, dass dieser zufallsgesteuert arbeitet.
